# FASCICULE DE BREVET EUROPEEN

(11) **EP 3 455 278 B1**
(45) Date de publication et mention de la délivrance du brevet: **04.12.2019**
(21) Numéro de dépôt: 17725705.2
(22) Date de dépôt: 02.05.2017
(51) Int. Cl.: C08G 65/40, C08G 65/46, C08L 71/00

(54) **COMPOSITION DE POLY-(ARYL-ETHER-CETONE) (PAEK) A FAIBLE TAUX DE COMPOSES VOLATILS ET SON UTILISATION DANS UN PROCÉDÉ DE FRITTAGE**
POLY-(ARYL-ETHER-KETON) (PAEK)-ZUSAMMENSETZUNG MIT GERINGEM GEHALT AN FLÜCHTIGEN VERBINDUNGEN UND VERWENDUNG DAVON IN EINEM SINTERVERFAHREN
POLY-(ARYL-ETHER-KETONE) (PAEK) COMPOSITION WITH A LOW CONTENT OF VOLATILE COMPOUNDS AND USE OF SAME IN A SINTERING METHOD

(30) Priorité: 09.05.2016 FR 1654131
(43) Date de publication de la demande: 20.03.2019
(60) Demande divisionnaire: 19205538.2
(73) Titulaire: Arkema France, 92700 Colombes (FR)
(72) Inventeur: BRULE, Benoît, 27170 BEAUMONT-LE-ROGER (FR); AMSTUTZ, Jérôme, 69390 CHARLY (FR); LE, Guillaume, 14200 HEROUVILLE SAINT CLAIR (FR); JOUANNEAU, Julien, 19406-0936 King of Prussia PA (US)
(74) Mandataire: A.P.I. Conseil
(86) Numéro de dépôt international: PCT/FR2017/051043
(87) Numéro de publication internationale: WO 2017/194855

(56) Documents cités:
- WO-A1-2013/085947
- WO-A1-2014/013202
- WO-A1-2014/191674
- US-A- 4 611 033
- US-A- 4 698 393

## Description

### [Domaine technique]

L'invention porte sur une composition de poly-aryl-éther-cétone (PAEK) destinée à être utilisée sous forme de poudre dans un procédé de fabrication additive, couche-par-couche, d'objet tridimensionnel, par frittage de ladite poudre provoqué par un rayonnement électromagnétique. Plus particulièrement, elle concerne une composition de Poly(aryl-éther-cétone) (PAEK) à faible taux de composés volatils.

Le rayonnement électromagnétique peut être un rayonnement infrarouge ou un rayonnement ultraviolet issu d'un faisceau laser, dans le cas du frittage laser (encore souvent dénommé « laser sintering » en terminologie anglo-saxonne), ou de toute autre source de rayonnement. Le terme « frittage » dans la présente description inclut tous ces procédés quel que soit le type de rayonnement. Même si, dans le texte qui suit, on fait référence le plus souvent au procédé de frittage laser, ce qui est écrit pour ce procédé est bien entendu valable pour les autres procédés de frittage.

### [Art antérieur]

Les Poly(aryl-éther-cétones) sont des polymères techniques hautes performances bien connus. Ils sont utilisés pour des applications contraignantes en température et/ou en contraintes mécaniques, voire chimiques. On retrouve ces polymères dans des domaines aussi variés que l'aéronautique et le spatial, les forages off-shore, l'automobile, le ferroviaire, la marine, l'éolien, le sport, le bâtiment, l'électronique ou encore les implants médicaux. Ils peuvent être mis en œuvre par toutes les technologies de mise en œuvre des thermoplastiques, tels que le moulage, la compression, l'extrusion, le filage, le poudrage ou encore le prototypage par frittage.

Deux voies de synthèse sont utilisées pour préparer les Poly-aryl-éther-cétones. Une première voie réside dans un procédé dit de substitution nucléophile. Ce procédé est toutefois complexe à mettre en œuvre, l'accès aux monomères étant difficile car il faut préparer des monomères fluorés ou chlorés spéciaux. Les conditions de synthèse du procédé de substitution nucléophile sont également difficiles (350°-400°C dans le diphénylsulfone) et les traitements post- réactionnels sont contraignants (élimination des sels et du solvant difficile).

Une deuxième voie réside dans un procédé dit de substitution électrophile, qui peut être conduit à haute température comme à l'ambiante. L'avantage de ce second procédé tient à la possibilité de polymériser à température modérée (-20°C à 120°C) ce qui limite les réactions secondaires. Par ailleurs, les monomères comme les solvants sont plus accessibles industriellement.

Ce dernier procédé est largement décrit dans la littérature, comme par exemple dans US4841013, US4816556, US4912181, US4698393, WO9500446, US4716211, WO2011004164 ou encore WO2011004164.

La réaction de substitution électrophile est réalisée entre un ou plusieurs chlorures d'acide aromatiques et un ou plusieurs éthers aromatiques en présence d'un acide de Lewis. Elle a lieu dans un solvant, en présence parfois d'un dispersant (US4698393, WO9500446) et se fait généralement en deux temps avec une première phase à température ambiante voire en dessous de 0°C, puis la réaction est complétée à une température comprise entre 0°C et 120°C selon le solvant. On peut aussi opérer à plus haute température mais cette voie génère plus de réactions secondaires. Le mélange réactionnel est ensuite traité par un composé protique qui permet d'extraire tout ou partie de l'acide de Lewis. Le choix du composé protique est fonction du solvant utilisé. Dans US4841013 et WO2011004164, US4716211, US4912181 ou WO2011004164 le solvant utilisé est le dichlorométhane et le composé protique est l'eau. Dans US4716556, WO9500446, le solvant est l'ortho-dichlorobenzène et le composé protique est le méthanol.

Bien que l'invention ne se limite aucunement à ce procédé, seul le procédé préféré de synthèse par réaction de substitution électrophile est décrit dans la suite de la description.

Le procédé de frittage laser est particulièrement sensible aux dégagements de fumées. Lors du frittage d'une poudre de PAEK, provoqué par un rayonnement électromagnétique, la poudre est maintenue à haute température, typiquement à une température supérieure à 240°C et qui peut aller jusqu'à 300°C pour du PEKK, tel que celui commercialisé par la société Arkema sous la référence Kepstan 6000, pendant toute la durée de construction de la pièce, qui peut durer plusieurs heures à plusieurs dizaines d'heure selon la complexité de la pièce. La fusion de la poudre de PAEK, provoquée par le rayonnement électromagnétique émis par le laser, engendre localement et très brièvement un pic de température qui peut entrainer le passage de certains constituants en phase vapeur. L'ensemble des composés volatils émis se condense alors sur la lentille du laser qui s'encrasse. Au fur et à mesure de l'encrassement de la lentille, l'énergie du faisceau laser reçue par la poudre a tendance à diminuer. Par conséquent, si rien n'est fait pour nettoyer la lentille, les propriétés mécaniques des pièces fabriquées par frittage laser diminuent au fil du temps, car plus la lentille s'encrasse, plus l'énergie du rayonnement électromagnétique reçu par la poudre diminue, et moins le frittage est efficace.

Il convient donc d'utiliser une composition de PAEK dont la teneur en composés volatils condensables est suffisamment faible pour assurer la constance des propriétés mécaniques des pièces durant l'ensemble des cycles de construction, tout en limitant les opérations de nettoyage de la lentille.

Des compositions de PAEK dégageant peu de fumées ou vapeurs condensables, lors de la construction des pièces tridimensionnelles, sont donc particulièrement intéressantes pour cette application de frittage.

La demande de brevet WO2014013202, déposée par la demanderesse, décrit un procédé de préparation de Poly-aryl-éther-cétone par réaction de substitution électrophile entre un ou plusieurs chlorures d'acide aromatiques et un ou plusieurs éthers aromatiques, en présence d'un acide de Lewis. Cette réaction est menée dans un solvant aprotique ne solubilisant l'eau que très faiblement et en deux temps. Une première phase de la réaction est réalisée à une température entre -5°C et 25°C sous agitation, puis la réaction est achevée à une température comprise entre 50 et 120°C. Le PAEK obtenu ensuite mis en contact du milieu réactionnel avec de l'eau en présence éventuelle d'acide et est séparé des effluents liquides. Une étape ultérieure de lavage du PAEK obtenu à l'eau, permet d'extraire tout ou partie de l'acide de Lewis. La demanderesse s'est aperçu qu'il est préférable d'éviter l'utilisation d'alcool pour effectuer cette étape de lavage, car l'alcool contribue à l'apparition de réactions secondaires, qui le rendent moins stable. Ce procédé permet donc d'obtenir un polymère très stable. Cependant, la demanderesse a constaté que la composition de PAEK obtenue selon ce procédé génère encore des vapeurs condensables au cours du frittage, ce qui signifie qu'elle contient encore des taux significatifs de composés susceptibles de passer en phase vapeur sous l'effet du rayonnement électromagnétique.

Après analyse de ces vapeurs condensables, il s'avère qu'elles contiennent encore des composés à base d'éther aromatique et des composés provenant de complexes d'hydroxy d'aluminium.

La demanderesse a donc cherché à améliorer encore la composition de PAEK, afin de réduire les teneurs de composés susceptibles de se vaporiser sous l'action du rayonnement électromagnétique et d'encrasser la lentille du système optique de l'équipement de frittage.

### [Problème technique]

L'invention a donc pour but de remédier à au moins un des inconvénients de l'art antérieur. En particulier, l'invention a pour but de proposer une composition de poly-aryl-éther-cétone comprenant des teneurs en éther aromatique et en aluminium suffisamment faibles pour qu'ils ne génèrent plus de vapeurs condensables susceptibles d'encrasser la lentille du système optique de l'équipement de frittage.

L'invention a en outre pour but de proposer un procédé de synthèse d'une composition de PAEK permettant d'éliminer suffisamment les composés susceptibles de se vaporiser pour qu'ils ne génèrent plus de vapeurs de nature à encrasser la lentille du système optique de l'équipement de frittage.

L'invention a enfin pour but de proposer un article tridimensionnel obtenu par frittage d'une poudre d'une telle composition de PAEK, couche-par-couche, à l'aide d'un rayonnement électromagnétique, ledit article tridimensionnel présentant des propriétés mécaniques satisfaisantes et sensiblement constantes dans le temps.

### [Brève description de l'invention]

Pour cela, l'invention porte sur une composition de Poly(aryl-éther-cétone) (PAEK), apte à être utilisée dans un procédé de construction d'objet tridimensionnel couche-par-couche par frittage provoqué par un rayonnement électromagnétique, ladite composition étant caractérisée en ce qu'elle comprend une teneur en éther aromatique comprise entre 0 et 0,4% massique et une teneur massique en aluminium inférieure à 1000ppm, de préférence inférieure à 600ppm et de manière davantage préférée inférieure à 500ppm.

Une telle composition ne génère pas de vapeurs condensables ou en quantité suffisamment faible pour ne pas générer un encrassement de la lentille, au moment de son frittage.

Selon d'autres caractéristiques optionnelles de la composition :
- de préférence, la teneur en éther aromatique est comprise entre 0 et 0,3% massique,
- de manière davantage préférée, la teneur en éther aromatique est comprise entre 0 et 0,2% massique et encore préféré entre 0 et 0,1% massique,
- la composition comprend en outre une teneur massique en aluminium inférieure à 1000ppm, de préférence inférieure à 600ppm et de manière davantage préférée inférieure à 500ppm et tout particulièrement entre 10 et 250 ppm, voire entre 5 et 100 ppm,

- la composition comprend au moins du polyéther-cétone-cétone (PEKK) qui représente plus de 60% massique, de préférence plus de 70% massique de la composition, borne comprise,
- la composition est une composition de Polyéther-cétone-cétone (PEKK),
- l'éther aromatique est le (1,4-phénoxybenzoyl) benzène,
- la composition se présente sous forme de poudre.

Pour obtenir une telle composition, la demanderesse a découvert, de manière surprenante, que la composition de PAEK, lorsqu'elle est synthétisée par une réaction de substitution électrophile classique, pouvait être lavée une première fois avec un mélange eau/alcool afin d'éliminer l'aluminium issu de l'acide de Lewis.

Plus particulièrement le procédé de synthèse de la composition consiste à mettre en contact un ou plusieurs chlorures d'acide aromatiques et un ou plusieurs éthers aromatique en présence d'un acide de Lewis dans un solvant ne solubilisant l'eau qu'à une teneur inférieure à 0,05% massique à 25°C à une température comprise entre -5 et +25°C sous agitation, à achever la polymérisation à une température comprise entre 50 et 120°C, puis à mettre en contact le mélange réactionnel avec de l'eau sous agitation en présence éventuelle d'acide, à séparer le poly-aryl-éther-cétone des effluents liquides, à laver le poly-aryl-éther-cétone en présence ou non d'acide et séparer les jus, et enfin à sécher le poly-aryl-éther-cétone obtenu à une température supérieure à la température de transition vitreuse Tg de 20°C ; et ce procédé est plus particulièrement caractérisé en ce que l'étape de lavage du poly-aryl-éther-cétone et de séparation des jus consiste à :
- effectuer un premier lavage à l'aide d'un mélange eau/alcool et séparer les jus,
- effectuer au moins un autre lavage complémentaire avec de l'eau ou de l'eau acide et séparer les jus.

Ainsi qu'il a été expliqué dans le document WO2014013202, l'alcool n'est pas un solvant recherché pour effectuer l'étape de lavage car il est connu pour entrainer des réactions secondaires. Pourtant, lorsque l'alcool est mélangé à de l'eau dans des proportions massiques comprises entre 95 et 60%, de préférence entre 95 et 80%, le mélange permet à la fois de réduire la teneur en éthers aromatiques, mais aussi la teneur en aluminium sans conduire à des réactions secondaires. De préférence, l'alcool est choisi parmi l'un au moins des alcools suivants : le méthanol, l'éthanol ou l'isopropanol.

L'invention porte en outre sur une utilisation d'une telle composition sous forme de poudre dans un procédé de construction d'objet couche-par-couche par frittage provoqué par un rayonnement électromagnétique.

L'invention porte enfin sur un article tridimensionnel obtenu par frittage d'une poudre couche-par-couche à l'aide d'un rayonnement électromagnétique, ladite poudre étant caractérisée en ce que sa composition est conforme à celle décrite ci-dessus.

D'autres avantages et caractéristiques de l'invention apparaitront à la lecture de la description suivante donnée à titre d'exemple illustratif et non limitatif.

### [Description de l'invention]

En préambule, il est précisé que les expressions « compris(e) entre » et/ou « inférieur(e) à » et/ou « supérieur(e) à » utilisées dans le cadre de cette description doivent s'entendre comme incluant les bornes citées.

Le terme « température de construction » désigne la température à laquelle le lit de poudre, d'une couche constitutive d'un objet tridimensionnel en construction, est chauffé pendant le procédé de frittage couche-par-couche de la poudre.

La composition de PAEK selon l'invention est synthétisée à partir de différentes combinaisons de di-chlorures d'acides aromatiques et de monochlorures d'acide et d'éthers aromatiques et/ou de biphényls aromatiques.

De préférence on choisira les chlorures d'acide parmi le chlorure de téréphthaloyle (TCl) et le chlorure disophthaloyle (ICl) ou leur mélange, dans des proportions pour que dans la structure PAEK finale, il y ait un ratio de motif para-dicetophényle / meta-dicetophényle de 100 à 50% et de préférence de 85 à 55%% et plus particulièrement de 82 à 60%.

Les monochlorures d'acides seront choisis parmi le chlorure de benzoyle et le chlorure de benzène sulfonyle.

De préférence on choisira les éthers aromatiques ou les biphényls aromatiques suivants: Le diphényle-éther, le 1,4-(phénoxybenzoyle) benzène (EKKE), le biphényle, le 4-phenoxybenzophénone, le 4-chlorobiphényle, le 4-(4-phénoxyphénoxy) benzophénone, et le biphényl 4-benzènesulphonylphényl phényléther.

Les poly-(aryl-éther-cétones) (PAEK) comportent les motifs de formules suivantes:

(-Ar-X-) et (-Ar₁-Y-)

dans lesquelles :
- Ar et Ar₁ désignent chacun un radical aromatique divalent;
- Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène ;
- X désigne un groupe électroattracteur ; il peut être choisi, de préférence, parmi le groupe carbonyle et le groupe sulfonyle,
- Y désigne un groupe choisi parmi un atome d'oxygène, un atome de soufre, un groupe alkylène, tel que -CH₂- et isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène. Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :
- un poly-éther-cétone-cétone, également nommé PEKK, comprenant des motifs de formule I A, de formule I B et leur mélange : 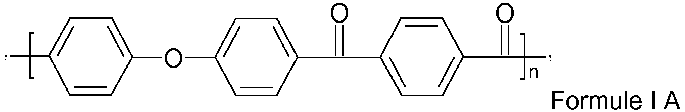 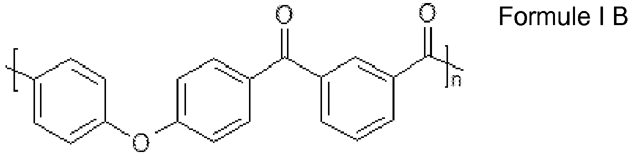
- un poly-éther-éther-cétone, également nommé PEEK, comprenant des motifs de formule II: 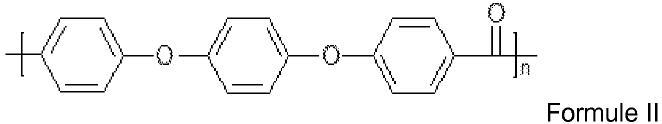
   Les enchainements peuvent être totalement para (Formule II). De la même façon on peut introduire, partiellement ou totalement, des enchaînements méta dans ces structures au niveau des éthers et des cétones selon les deux exemples des formules III et IV ci-dessous : 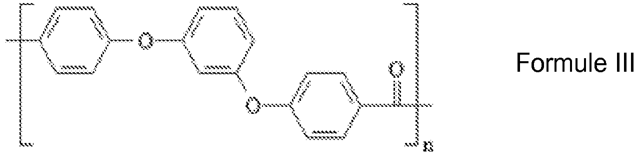
   Ou encore : 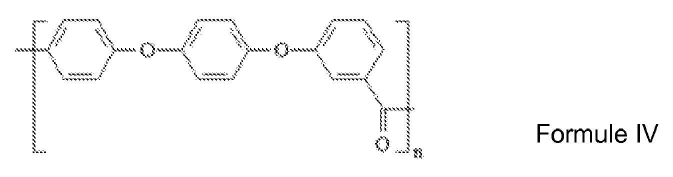
   Ou des enchainements en ortho selon la formule V : 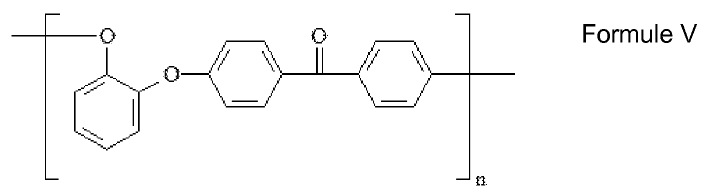
- un poly-éther-cétone, également nommé PEK, comprenant des motifs de formule VI : 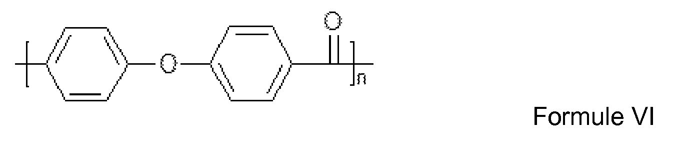
   De la même façon, l'enchainement peut être totalement para mais on peut introduire aussi des enchaînements méta partiellement ou totalement (formules VII et VIII): 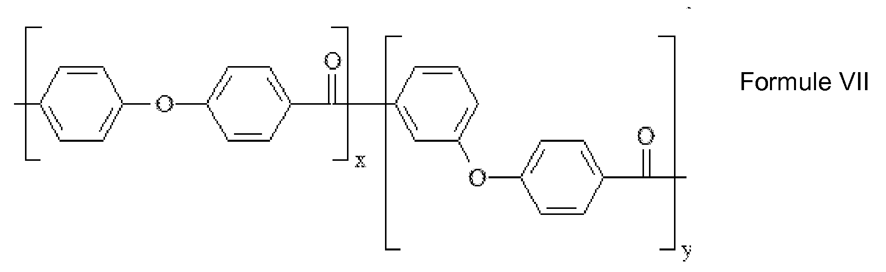
   Ou 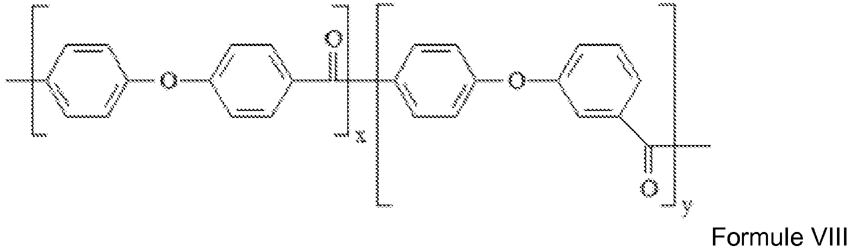
- un poly-éther-éther-cétone-cétone, également nommé PEEKK, comprenant des motifs de formules IX : 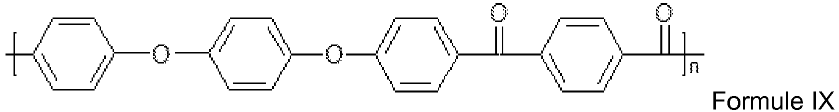
   De la même façon on peut introduire des enchaînements méta dans ces structures au niveau des éthers et des cétones.
- un poly-éther-éther-éther-cétone, également nommé PEEEK, comprenant des motifs de formules X :

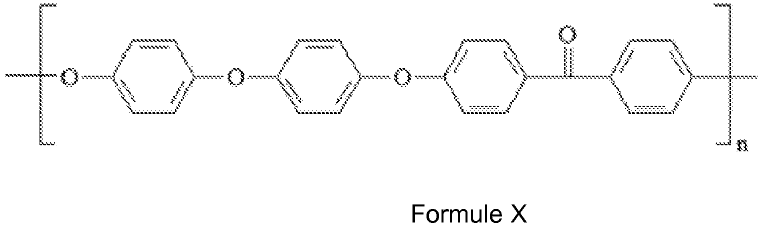

De la même façon on peut introduire des enchaînements méta dans ces structures au niveau des éthers et des cétones mais aussi des enchaînements biphénols selon la formule XI :

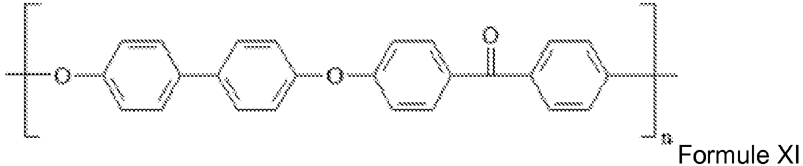

D'autres arrangements du groupe carbonyle et de l'atome d'oxygène sont également possibles.

De préférence, les PAEK utilisés dans l'invention sont choisis parmi les PEKK, le PEEK ou les copolymères à base de PEEK, le PEK ou les copolymères à base de PEK.

Lors de la synthèse de ces Poly-aryl-éther-cétones, par le procédé préféré de réaction de substitution électrophile, on utilise de préférence les acides de Lewis suivant : Trichlorure d'aluminium anhydre, tribromure d'aluminium anhydre, et de manière plus préférée le trichlorure d'aluminium anhydre.

Les solvants utilisés sont solvants des chlorures d'acide et non solvants du polymère et solubilisant l'eau à une teneur < 0.2% massique, de préférence <0.05% massique. De préférence, il s'agit d'orthodichloro-benzène.

Les différentes phases du procédé de synthèse peuvent être opérées dans un même réacteur ou une succession de plusieurs réacteurs. Une première phase de la réaction est réalisée à une température entre -5°C et 25°C sous agitation, puis la réaction de polymérisation est achevée à une température comprise entre 50 et 120°C. Le PAEK obtenu est séparé des effluents liquides après mise en contact du milieu réactionnel avec de l'eau en présence éventuelle d'acide. Cette étape de séparation est suivie d'une étape de lavage.

De manière avantageuse, cette étape de lavage consiste à mettre en contact le PAEK synthétisé, par exemple un PEKK, avec un mélange eau/alcool, sous agitation entre 15 et 60°C, de préférence entre 25 et 50 °C et à maintenir cette agitation pendant une heure. Selon une variante, on peut aussi additionner le mélange eau/alcool dans un réacteur après y avoir introduit le PAEK.

Cette séquence de lavage peut être divisée en plusieurs séquences successives selon la taille de l'équipement utilisé.

Le mélange eau/alcool utilisé représente de 15 à 50 fois la masse de PAEK à laver. L'eau peut être acidifiée jusqu'à 10% d'acide chlorhydrique pur, de préférence 4%.

L'alcool est de préférence choisi parmi l'un au moins des alcools suivants : le méthanol, l'éthanol ou l'isopropanol. Il joue le rôle de solvant et de complexant de l'aluminium et favorise ainsi son élimination.

Les proportions d'alcool dans le mélange ne doivent cependant pas être trop élevées de manière à ne pas entrainer l'apparition de réactions secondaires. Elles ne doivent pas être trop faibles non plus pour permettre une élimination suffisante de l'aluminium.

Un compromis doit donc être réalisé sur les proportions en alcool. Ainsi, les proportions massiques d'alcool dans le mélange eau/méthanol sont de préférence comprises entre 95 et 60%, de préférence entre 95 et 80%.

Après ce lavage, le mélange réactionnel est séparé de la majorité des jus par un séparateur adapté.

Les jus sont soumis à des traitements adaptés, décantation, neutralisation, distillation et traitement sur résine permettant de les valoriser ou les recycler dans le procédé.

Le polymère est ensuite soumis à plusieurs étapes de lavage complémentaire avec de l'eau ou de l'eau acide, puis séparation.

Enfin une étape de séchage du polymère est effectuée à une température supérieure de 20°C à la température de transition vitreuse Tg sous 30 mbar.

Le produit obtenu présente une teneur en éther aromatique comprise entre 0 et 0,4% massique. De préférence cette teneur est comprise entre 0 et 0,3% massique, et de manière davantage préférée elle est comprise entre 0 et 0,2% massique. On entend par éther aromatique des composés de masse molaire inférieure à 500g.mol⁻¹, tel que l'EKKE dont la masse molaire est de 470g/mol. La teneur massique en Al dans le produit obtenu est quant à elle inférieure à 1000ppm, de préférence inférieure à 600ppm, et de manière davantage préférée inférieure à 500ppm.

Une telle composition peut être utilisée sous forme de poudre dans un procédé de construction d'objet à l'aide d'un rayonnement électromagnétique, notamment laser, consistant à irradier couche-par-couche la poudre, selon un tracé déterminé, afin de fondre localement le poly-aryl éther -cétone et obtenir le dit objet.

La composition comprend au moins du polyéther-cétone-cétone (PEKK) qui représente plus de 60% massique, de préférence plus de 70% massique de la composition, borne comprise. Les 30 à 40 % massiques restants peuvent par exemple être constitués soit par d'autres polymères appartenant à la famille des PAEK, et/ou par des fibres, telles que des fibres de carbone, des fibres de verre par exemple, et/ou par des charges telles que des charges minérales, des billes de verre ou encore par des noirs de carbone, des graphites, des graphènes, des nanotubes de carbone.

La composition de PAEK est de préférence une composition de Polyéther-cétone-cétone (PEKK), et l'éther aromatique est le (1,4-phénoxybenzoyl) benzène (EKKE).

La composition se présente sous forme de poudre, prête à être utilisée dans un procédé de frittage provoqué par rayonnement électromagnétique, pour réaliser des objets tridimensionnels couche-par-couche.

L'invention se rapporte enfin à un article tridimensionnel obtenu par frittage d'une poudre couche-par-couche à l'aide d'un rayonnement électromagnétique, ladite poudre étant une poudre de PAEK présentant une composition dans laquelle la teneur en éther aromatique est comprise entre 0 et 0,4 % massique. En outre, la teneur massique en aluminium dans la composition est inférieure à 1000ppm, de préférence inférieure à 600ppm, et de manière davantage préférée inférieure à 500ppm. Une telle poudre ne génère pas, ou très peu, de vapeurs, si bien que la lentille de l'équipement de frittage ne s'encrasse pas et les articles tridimensionnels fabriqués avec une telle poudre présentent des propriétés mécaniques satisfaisantes et constantes au cours du temps.

### Exemples :

### 1. Comparaison de l'état de la lentille en fonction de la teneur en EKKE mesurée sur différents échantillons de PEKK

### Protocole de mesure de la teneur en éthers aromatiques :

Les échantillons sont mis en solution dans un mélange BTF/HFIP en présence d'un standard interne.

Toutes les analyses ont été réalisées sur un GC VARIAN® 3800 équipé d'un injecteur on-column 1041 et d'un détecteur FID.
- Colonne: MXT 500 Sim Dist 6m / 320µm / ef=0,15µm
- Température Det (FID) =400°C
- Température Injecteur 1041 = régulé à T ≤ 40°C
- Débit colonne (constant flow) = 3ml/min,
- Programmation four = 40°C (2min) → 150°C à 8°C/min
- 150°C (0min) → 330°C(Omin) à 15°C/min
- 330°C (0min) → 360°C(5min) à 25°C/min
- Gaz vecteur = hélium
- Mode d'injection : dans la colonne avec le point d'injection situé dans la partie régulé par le four
- Volume injecté=0,5µl

Des essais de frittage ont été réalisés sur trois échantillons de PEKK. Un premier produit A, synthétisé et commercialisé par la société OPM sous la référence OxPEKK, comprend une teneur massique en EKKE, mesurée par GC, de 1,13%. Un produit B, un PEKK commercialisé par la société Arkema sous la référence Kepstan 6000 et synthétisé selon le procédé décrit dans le document WO2014013202, avec un lavage exclusivement à l'eau, comprend une teneur en EKKE, mesurée par GC, de 0,45%. Un troisième produit C, un PEKK Kepstan 6000 synthétisé selon le même procédé que pour le produit B, mais dont la première étape de lavage est réalisée avec un mélange eau/méthanol dont les proportions massiques en alcool sont comprises entre 95 et 60%, de préférence entre 95 et 80%, comprend une teneur en EKKE, mesurée par GC, de 0.25% massique.

Ces essais de frittage ont été menés à une température de construction de 285°C. Ces essais ont révélés que les deux premiers produits A et B génèrent un dégagement de vapeurs important lors du test (voir tableau I ci-dessous). Ces vapeurs se retrouvent condensées sur la lentille. L'analyse d'un prélèvement de ce condensat montre la présence d'EKKE. En plus d'un encrassement de la machine, ce dépôt sur la lentille modifie l'énergie reçue par la poudre de PEKK qui ne se fritte pas correctement et l'objet tridimensionnel résultant présente alors des propriétés mécaniques qui diminuent avec le temps.

**Tableau I**

| | Taux EKKE (%) | Etat de la lentille |
|---|---|---|
| Produit A | 1,13% | Dépôt |
| Produit B | 0.45% | Dépôt |
| Produit C | 0.25% | Pas de dépôt |

### 2. Comparaison de l'état de la lentille en fonction de la teneur en Al

### Méthode de la détermination de la teneur en Aluminium La minéralisation :

- Peser 0.5g de l'échantillon dans un digitube.
- Ajouter 10 mL d'acide nitrique 67%
- Chauffer 2 heures à 99°C dans un bloc chauffant
- Filtrer sur filtre Whatman (589/1 diam 125mm)
- Compléter au trait de jauge avec un volume final de 25 mL avec de l'eau Milly Q

### Quantification :

- Par la technique ICP/AES optique (ICP Vista Pro) Varian
- Etalon passé avant et après échantillon pour contrôle de dérive
- Longueur d'onde de travail : 396.15 nm pour l'élément aluminium

Deux échantillons de produit B (échantillons numérotés 5 et 6 dans le tableau II ci-dessous) et quatre échantillons de produit C (échantillons numérotés 1 à 4 dans le tableau II ci-dessous) de l'exemple 1 ont été comparés. La teneur massique en aluminium de chaque échantillon a été mesurée par la méthode décrite ci-dessus. Le produit B, correspondant à un PEKK de l'art antérieur, comprend une teneur en aluminium comprise entre 1900 et 2000ppm selon les échantillons. Le produit C, conforme à l'invention, comprend une teneur en aluminium qui varie de 8 ppm, 9 ppm jusqu'à 800 ppm selon les échantillons.

Des analyses thermogravimétriques (ATG) ont été réalisées avec un appareil Netzsch TG209F1. Cet appareil est composé de deux éléments principaux: une microbalance très sensible couplée à un four régulé en température. La microbalance est capable de détecter une variation de 0,1 mg pour une capacité maximale de 1,3 g. L'échantillon est placé dans une coupelle en platine et le fléau maintient le plateau en équilibre via un courant proportionnel à la masse supportée. La température est régulée entre 30 °C et 1000 °C avec des montées en température jusqu'à 200 °C.min⁻¹. Un thermocouple à proximité de l'échantillon assure un suivi de la température et régule la puissance de chauffage. L'étalonnage a été effectué avec de l'Indium et du Zinc dont les points de Curie sont respectivement de 157 °C et 420 °C.

Toutes les analyses ATG sur les échantillons ont été réalisées en isotherme, sous azote, à une température de 285°C, correspondant à la température de construction en frittage laser, pendant une heure. Les pertes de masses mesurées sont indiquées dans le tableau II ci-dessous.

**Tableau II**

| ATG isotherme 1 h à 285°C sous N2 | | Teneur en Al |
|---|---|---|
| Echantillons | Pertes en masse en isotherme en % m | |
| 1 - Produit C | 0 | 8 ppm |
| 2 - Produit C | 0 | 9 ppm |
| 3 - Produit C | 0 | 200 ppm |
| 4 - Produit C | 0 | 800 ppm |
| 5 - Produit B | 0.3 | 1900 ppm |
| 6 - Produit B | 0.2 | 2000 ppm |

Ces mesures de perte de masse par ATG démontrent qu'il existe une corrélation entre la stabilité thermique de l'échantillon de PEKK et sa teneur en Aluminium. Ainsi, à des teneurs en aluminium inférieures à 1000ppm, la composition de PEKK est stable thermiquement.

Les résultats obtenus par ATG démontrent que l'aluminium des échantillons 5 et 6 du produit B de l'art antérieur, forme des complexes de nature à générer des vapeurs sous l'effet de la température, qui génèrent des vapeurs suffisantes pour encrasser la lentille de l'équipement de frittage. Le produit C selon l'invention contient des teneurs en aluminium suffisamment basses pour ne pas générer des vapeurs, aucune perte de masse n'étant détectée. La lentille de l'équipement de frittage n'est donc pas encrassée au moment du frittage de la poudre de PEKK selon l'invention.

La composition de PAEK selon l'invention permet donc de préserver l'équipement de frittage et d'obtenir des objets tridimensionnels frittés avec des propriétés mécaniques satisfaisantes et constantes dans le temps.

## Revendications

1. Composition de Poly(aryl-éther-cétone) (PAEK), apte à être utilisée dans un procédé de construction d'objet tridimensionnel couche-par-couche par frittage provoqué par un rayonnement électromagnétique, ladite composition étant **caractérisée en ce qu'**elle comprend une teneur en éther aromatique comprise entre 0 et 0,4% massique et une teneur massique en aluminium inférieure à 1000ppm, de préférence inférieure à 600ppm et de manière davantage préférée inférieure à 500ppm., dont la teneur est mesurée conformément à la description.

2. Composition selon la revendication 1, **caractérisée en ce que** la composition comprend au moins du polyéther-cétone-cétone (PEKK) qui représente plus de 60% massique, de préférence plus de 70% massique de la composition, borne comprise.

3. Composition selon la revendication 1, **caractérisée en ce que** la composition est une composition de Polyéther- cétone -cétone (PEKK).

4. Composition selon l'une des revendications 1 à 2, **caractérisée en ce que** l'éther aromatique est le (1,4-phénoxybenzoyl) benzène.

5. Utilisation d'une composition selon l'une des revendications 1 à 4, ladite composition se présentant sous forme de poudre, dans un procédé de construction d'objet couche-par-couche par frittage provoqué par un rayonnement électromagnétique.

6. Article tridimensionnel obtenu par frittage d'une poudre couche-par-couche à l'aide d'un rayonnement électromagnétique, ladite poudre étant **caractérisé en ce que** sa composition est conforme à l'une des revendications 1 à 4.

7. Procédé de synthèse d'une composition de Poly(aryl-éther-cétone) (PAEK) selon l'une des revendication 1 à 4, ledit procédé consistant à :
- mettre en contact un ou plusieurs chlorures d'acide aromatiques et un ou plusieurs éthers aromatique en présence d'un acide de Lewis dans un solvant ne solubilisant l'eau qu'à une teneur inférieure à 0,05% massique à 25°C à une température comprise entre -5 et +25°C sous agitation,
- achever la polymérisation à une température comprise entre 50 et 120°C,
- mettre en contact le mélange réactionnel avec de l'eau sous agitation en présence éventuelle d'acide,
- séparer le poly-aryl-éther-cétone des effluents liquides,
- laver le poly-aryl-éther-cétone en présence ou non d'acide et séparer les jus,
- sécher le poly-aryl-éther-cétone obtenu à une température supérieure à la température de transition vitreuse Tg de 20°C,
ledit procédé étant en outre **caractérisé en ce que** l'étape de lavage du poly-aryl-éther-cétone et de séparation des jus consiste à :
- effectuer un premier lavage à l'aide d'un mélange eau/alcool et séparer les jus, le mélange eau/ alcool comprenant des proportions en alcool comprises entre 95 et 60% massique, de préférence entre 95 et 80% massique,
- effectuer au moins un autre lavage complémentaire avec de l'eau ou de l'eau acide et séparer les jus.

8. Procédé selon la revendication 7, **caractérisé en ce que** l'alcool est choisi parmi l'un au moins des alcools suivants : le méthanol, l'éthanol ou l'isopropanol.

## Patentansprüche

1. Poly(aryletherketon)(PAEK)-Zusammensetzung, die zur Verwendung bei einem Verfahren zum schichtweisen Aufbau eines dreidimensionalen Gegenstands mittels Sinterns, das durch eine elektromagnetische Strahlung bewirkt wird, geeignet ist, wobei die Zusammensetzung **dadurch gekennzeichnet ist, dass** sie einen Gehalt an aromatischem Ether zwischen 0 und 0,4 Massen-% und einen Massengehalt an Aluminium von weniger als 1000 ppm, vorzugsweise weniger als 600 ppm und weiter bevorzugt weniger als 500 ppm aufweist, wobei der Gehalt davon gemäß der Beschreibung gemessen wird.

2. Zusammensetzung nach Anspruch 1, **dadurch gekennzeichnet, dass** die Zusammensetzung mindestens Polyetherketonketon (PEKK) umfasst, das mehr als 60 Massen-% und vorzugsweise mehr als 70 Massen-% der Zusammensetzung, Grenzwerte eingeschlossen, ausmacht.

3. Zusammensetzung nach Anspruch 1, **dadurch gekennzeichnet, dass** es sich bei der Zusammensetzung um eine Polyetherketonketon(PEKK)-Zusammensetzung handelt.

4. Zusammensetzung nach einem der Ansprüche 1 bis 2, **dadurch gekennzeichnet, dass** es sich bei dem aromatischen Ether um (1,4-Phenoxybenzoyl)benzol handelt.

5. Verwendung einer Zusammensetzung nach einem der Ansprüche 1 bis 4, wobei die Zusammensetzung in Pulverform vorliegt, bei einem Verfahren zum schichtweisen Aufbau eines Gegenstands mittels Sinterns, das durch eine elektromagnetische Strahlung bewirkt wird.

6. Dreidimensionaler Gegenstand, erhalten durch schichtweises Sintern eines Pulvers mit Hilfe einer elektromagnetischen Strahlung, wobei das Pulver **dadurch gekennzeichnet ist, dass** seine Zusammensetzung einem der Ansprüche 1 bis 4 entspricht.

7. Verfahren zur Synthese einer Poly(arylether-keton)(PAEK)-Zusammensetzung nach einem der Ansprüche 1 bis 4, wobei das Verfahren aus Folgendem besteht:
- Inberührungbringen eines oder mehrerer aromatischer Säurechloride und eines oder mehrerer aromatischer Ether in Gegenwart einer Lewis-Säure in einem Lösungsmittel, das Wasser bei 25 °C nur bis zu einem Gehalt von weniger als 0,05 Massen-% löst, bei einer Temperatur zwischen -5 und +25 °C unter Rühren;
- Vollenden der Polymerisation bei einer Temperatur zwischen 50 und 120 °C,
- Inberührungbringen der Reaktionsmischung mit Wasser unter Rühren, gegebenenfalls in Gegenwart von Säure,
- Abtrennen des Polyaryletherketons von den flüssigen Austrägen,
- Waschen des Polyaryletherketons, gegebenenfalls in Gegenwart von Säure, und Abtrennen der Waschflüssigkeiten,
- Trocknen des erhaltenen Polyaryletherketons bei einer Temperatur, die 20 °C über der Glasübergangstemperatur Tg liegt,
wobei das Verfahren außerdem **dadurch gekennzeichnet ist, dass** der Schritt des Waschens des Polyaryletherketons und Abtrennens der Waschflüssigkeiten aus Folgendem besteht:
- Durchführen einer ersten Wäsche mit Hilfe einer Wasser/Alkohol-Mischung und Abtrennen der Waschflüssigkeiten, wobei die Wasser/Alkohol-Mischung Alkoholanteile zwischen 95 und 60 Massen-% und vorzugsweise zwischen 95 und 80 Massen-% umfasst,
- Durchführen mindestens einer weiteren zusätzlichen Wäsche mit Wasser oder saurem Wasser und Abtrennen der Waschflüssigkeiten.

8. Verfahren nach Anspruch 7, **dadurch gekennzeichnet, dass** der Alkohol aus einem oder mehreren der folgenden Alkohole ausgewählt wird: Methanol, Ethanol oder Isopropanol.

## Claims

1. Poly(aryl-ether-ketone) (PAEK) composition, capable of being used in a process for constructing a three-dimensional object layer-by-layer by electromagnetic radiation-generated sintering, said composition being **characterized in that** it comprises an aromatic ether content of between 0 and 0.4% by weight, and a weight content of aluminium of less than 1000 ppm, preferably less than 600 ppm and more preferably less than 500 ppm, the content of which is measured in accordance with the description.

2. Composition according to Claim 1, **characterized in that** the composition comprises at least polyether-ketone-ketone (PEKK) which represents more than 60% by weight, preferably more than 70% by weight of the composition, limit included.

3. Composition according to Claim 1, **characterized in that** the composition is a polyether-ketone-ketone (PEKK) composition.

4. Composition according to either of Claims 1 and 2, **characterized in that** the aromatic ether is (1,4-phenoxybenzoyl)benzene.

5. Use of a composition according to one of Claims 1 to 4, said composition being in powder form, in a process for constructing an object layer-by-layer by electromagnetic radiation-generated sintering.

6. Three-dimensional article obtained by sintering a powder layer-by-layer using electromagnetic radiation, said powder being **characterized in that** the composition thereof is in accordance with one of Claims 1 to 4.

7. Process for synthesizing a poly (aryl-ether-ketone) (PAEK) composition according to one of Claims 1 to 4, said process consisting in:
- bringing one or more aromatic acid chlorides and one or more aromatic ethers into contact in the presence of a Lewis acid in a solvent which dissolves water only to a content of less than 0.05% by weight at 25°C at a temperature of between -5°C and +25°C, with stirring;
- completing the polymerization at a temperature of between 50°C and 120°C;
- bringing the reaction mixture into contact with water, with stirring, in the optional presence of acid;
- separating the polyaryl-ether-ketone from the liquid effluents;
- washing the polyaryl-ether-ketone in the presence or absence of acid and separating the liquors;
- drying the polyaryl-ether-ketone obtained at a temperature 20°C above the glass transition temperature Tg;
said process being further **characterized in that** the step of washing the polyaryl-ether-ketone and of separating the liquors consists in:
- carrying out a first washing using a water/alcohol mixture and separating the liquors, the water/alcohol mixture comprising proportions of alcohol of between 95% and 60% by weight, preferably between 95% and 80% by weight;
- carrying out at least one other additional washing with water or acid water and separating the liquors.

8. Process according to Claim 7, **characterized in that** the alcohol is chosen from at least one of the following alcohols: methanol, ethanol or isopropanol.
